# EUROPEAN PATENT SPECIFICATION

(11) **EP 2 931 057 B1**
(45) Date of publication and mention of the grant of the patent: **04.09.2019**
(21) Application number: 13802996.2
(22) Date of filing: 12.12.2013
(51) Int. Cl.: A23G 4/20, A23G 4/02, A23G 4/04, A23G 4/10

(54) **PROCESS FOR REDUCING THE STICKINESS OF A CHEWING GUM CORE COMPOSITION TO A SURFACE OF A PROCESSING MACHINERY USING ISOMALTULOSE**
VERFAHREN ZUR VERRINGERUNG DES KLEBEVERHALTENS EINER KAUGUMMIKERNZUSAMMENSETZUNG AUF EINER OBERFLÄCHE EINER VERARBEITUNGSMASCHINE MIT ISOMALTULOSE
PROCÉDÉ PERMETTANT DE RÉDUIRE L'ADHÉSION DE LA COMPOSITION DE NOYAU D'UNE GOMME À MÂCHER SUR LA SURFACE D'UNE MACHINE DE TRAITEMENT UTILISANT DE L'ISOMALTULOSE

(30) Priority: 13.12.2012 EP 12197035; 13.12.2012 US 201261736808 P
(43) Date of publication of application: 21.10.2015
(73) Proprietor: Südzucker AG, 68165 Mannheim (DE)
(72) Inventor: DÖRR, Tillmann, 67591 Hohen-Sülzen (DE); HASSLINGER, Bernd, 67316 Carlsberg (DE)
(74) Representative: Wohlfahrt, Jan Günther
(86) International application number: PCT/EP2013/076316
(87) International publication number: WO 2014/090916

(56) References cited:
- WO-A1-91/15941
- US-A- 5 298 263
- US-A- 5 399 365

## Description

The present invention relates to process for reducing the stickiness of a composition of a chewing gum core to an internal contact surface of a first chewing gum processing machinery in a chewing gum preparation, wherein isomaltulose is mixed with a chewing gum base composition and to the use of isomaltulose in a composition of a chewing gum core for reducing stickiness of the composition to the internal contact surface of a chewing processing machinery.

Chewing gums containing isomaltulose, which is also called palatinose, are known. US 5,298,263 discloses chewing gum compositions with isomaltulose in the coating.

However, for the production of sugar free chewing gums in the majority of cases maltitol is used instead of isomalt or isomaltulose, which maltitol causes undesirable stickiness of the chewing gum composition to the processing apparatus.

The technical problem underlying the present invention is to provide methods and means to reduce the stickiness of a composition of a chewing gum core to surfaces of the chewing processing machinery in which the composition of a chewing gum core is kneaded and produced.

The present invention solves the underlying technical problem by the provision of a process for reducing the stickiness of a composition of a chewing gum core to an internal contact surface of a first chewing gum processing machinery in a chewing gum preparation process according to claim 1.

The present invention solves the underlying technical problem by the provision of a process for reducing the stickiness of a composition of a chewing gum core to an internal contact surface of a first chewing gum processing machinery in a chewing gum preparation process comprising the following steps: a) providing isomaltulose in an amount suitable to reduce stickiness of the composition to the surface, wherein the isomaltulose particles have a diameter of less than 100 µm, b) providing a chewing gum base composition and c) kneading the isomaltulose provided in step a) with the chewing gum base composition provided in step b) and obtaining the isomaltulose-containing composition of a chewing gum core, wherein step c) is carried out on the internal contact surface of the first chewing gum processing machinery, and wherein the amount of isomaltulose provided in step a) is at least 10 weight-% of the isomaltulose-containing composition of the chewing gum core obtained in step c).

Surprisingly, it could be shown that a chewing gum base composition which is mixed with isomaltulose shows a decreased stickiness to internal contact surfaces of machines, especially metal- or alloy-surfaces of machineries which are used for the production of chewing gums. Surprisingly, it could also be shown that the chewing gum base shows reduced stickiness already to the machinery in which the chewing gum base composition is mixed with the isomaltulose, for example a kneader.

In a preferred embodiment of the present invention, the stickiness is reduced in comparison to an amount equivalent maltitol and/or sorbitol-containing composition of a chewing gum core.

In a preferred embodiment of the present invention, the stickiness is reduced in comparison to an amount equivalent maltitol-containing composition of a chewing gum core.

In a preferred embodiment of the present invention, the stickiness is reduced in comparison to an amount equivalent sorbitol-containing composition of a chewing gum core.

In a preferred embodiment of the present invention, the stickiness is reduced in comparison to an amount equivalent maltitol-sorbitol-mixture-containing composition of a chewing gum core.

In the context of the present invention, an "amount equivalent maltitol-containing composition of a chewing gum core" is a composition of a chewing gum core which contains the same ingredients in the same amount as the composition of a chewing gum core obtained in step c) beside that the isomaltulose is exchanged by the same amount of maltitol, calculated in weight.

In the context of the present invention, an "amount equivalent sorbitol-containing composition of a chewing gum core" is a composition of a chewing gum core which contains the same ingredients in the same amount as the composition of a chewing gum core obtained in step c) beside that the isomaltulose is exchanged by the same amount of sorbitol, calculated in weight.

In the context of the present invention, an "amount equivalent maltitol-sorbitol-mixture-containing composition of a chewing gum core" is a composition of a chewing gum core which contains the same ingredients in the same amount as the composition of a chewing gum core obtained in step c) beside that the isomaltulose is exchanged by the same amount of a maltitol-sorbitol-mixture, calculated in weight.

In the context of the present invention the reduction of stickiness is measured by comparing the stickiness obtained by the method of the present invention obtaining an isomaltulose-containing composition of a chewing gum core with the stickiness obtained by a method obtaining an amount equivalent maltitol-containing composition of a chewing gum core and/or with the stickiness obtained by a method obtaining an amount equivalent sorbitol-containing composition of a chewing gum core and/or with the stickiness obtained by a method obtaining an amount equivalent maltitol-sorbitol-mixture-containing composition of a chewing gum core.

In the context of the present invention the stickiness is measured as rests of a composition of a chewing gum core in the inner contact surface of a kneader after the composition of a chewing gum core is discharged after step c), wherein no force is used to scrap or scratch the composition of a chewing gum core out of the kneader. The stickiness is measured as the weight-% of the rests in relation to the complete composition of a chewing gum core obtained in step c).

Preferably a kneader is used as described in the example of the present disclosure. More preferably the stickiness is measured as outlined above using a sigma kneading machine IP 25 AP/T-CG from Gabler GmbH & Co. KG, Ettlingen, Germany, having a maximum working capacity of 17.5 litres. Preferably a rotation speed of at least 15 rpm to at most 45 rpm is used. Preferably the stickiness is measured by as outlined above by a cleanout of the kneader with overturning the motorized vessel at an angle of 100°.

The stickiness is measured by comparing the stickiness of compositions of a chewing gum core having the same total weight. Preferably, the total weight used to measure the stickiness in a kneader as outlined above and described in the example is 10 kg.

The temperature at which the stickiness in a kneader as outlined above and described in the example is measured is from at least 30°C to at most 70 °C, preferably around 50 °C, most preferably 50 °C.

For measuring the stickiness, the mixture is kneaded for around 100 minutes, more preferably for 100 minutes.

Preferably the kneader is emptied after a resting time of 20 minutes following the kneading procedure. Preferably for measuring the stickiness, the gum base and glycerol are kneaded for 50 minutes without the isomaltulose or the maltitol or the sorbitol, then half of the isomaltulose or half of the maltitol or half of the sorbitol is added and the mixture is kneaded for further 20 minutes before the other half of the isomaltulose or the maltitol or the sorbitol is added and the mixture is kneaded for further 30 minutes.

Preferably the stickiness is measured as shown in the example.

Preferably only less than 20 weight-%, even more preferably less than 15 weight-%, even more preferably less than 10 weight-%, most preferably less than 7 weight-% of the total isomaltulose-containing composition of a chewing gum core stick to the surface of the kneader if measured as outlined above.

Preferably only less than 5 weight-%, even more preferably less than 4 weight-%, even more preferably less than 2 weight-%, most preferably less than 1 weight-% of the total isomaltulose-containing composition of a chewing gum core stick to the surface of the kneader if measured as outlined above.

In a preferred embodiment of the present invention, a reduction in stickiness of at least 5%, more preferably of at least 7%, even more preferably of at least 10%, even more preferably of at least 15% or of at least 20% compared to maltitol, sorbitol or maltitol-sorbitol-mixtures containing composition of a chewing gum cores is obtained.

In a preferred embodiment of the present invention, a reduction in stickiness of at least 25%, more preferably of at least 30%, even more preferably of at least 50%, even more preferably of at least 75% or of at least 90% compared to maltitol, sorbitol or maltitol-sorbitol-mixtures containing composition of a chewing gum cores is obtained.

In a preferred embodiment of the present invention, the process according to the present invention is for intentionally reducing the stickiness of a composition of a chewing gum core to an internal contact surface of the first chewing gum processing machinery in a chewing gum preparation process. The term "intentionally" means that the purpose of reducing the stickiness is purposefully desired, recognized and achieved and is not solely reached by chance and/or unrecognized.

In the context of the present invention, a "contact surface" or an "internal contact surface" is a surface of a chewing gum processing machinery which comes into contact with the composition of a chewing gum core during the process according to the present invention on purpose, i.e. a surface which is designed to get into contact with the composition of a chewing gum core during the production-process. Such an internal contact surface is for example the inner surface of a kneading chamber of a kneader. The skilled person knows which chewing gum processing machineries can be used and which parts, i.e. which internal contact surfaces, come into contact with the composition of a chewing gum core during the production.

Preferably, the temperature at which step c) is performed is from at least 30°C to at most 70°C, more preferably around 50°C.

In a preferred embodiment of the present invention, the process according to the present invention comprises the further step d) subjecting the obtained isomaltulose-containing composition of a chewing gum core to a surface of a second chewing gum processing machinery.

In a preferred embodiment of the present invention, the process is for reducing, more preferably intentionally reducing, the stickiness of a composition of a chewing gum core to an internal contact surface of the second chewing gum processing machinery in a chewing gum preparation process.

In a preferred embodiment of the present invention, the internal contact surface of the first chewing gum processing machinery is made of at least one inorganic material. In a preferred embodiment of the present invention, the internal contact surface of the first chewing gum processing machinery is made of metal or alloy. In a preferred embodiment of the present invention, the internal contact surface of the first chewing gum processing machinery is made of a metal or an alloy. In a preferred embodiment of the present invention, the internal contact surface of the first chewing gum processing machinery is made of steel. In a preferred embodiment of the present invention, the internal contact surface of the first chewing gum processing machinery is made of stainless steel.

In a preferred embodiment of the present invention, the internal contact surfaces of the first and the second chewing gum processing machinery are made of at least one inorganic material. In a preferred embodiment of the present invention, the internal contact surfaces of the first and the second chewing gum processing machinery are made of a metal or an alloy. In a preferred embodiment of the present invention, the internal contact surfaces of the first and the second chewing gum processing machinery are made of steel. In a preferred embodiment of the present invention, the internal contact surfaces of the first and the second chewing gum processing machinery are made of stainless steel.

A person skilled in the art knows suitable machineries for producing chewing gums and suitable machinery surface materials coming into contact with the chewing gum base composition.

In a preferred embodiment of the present invention, the first chewing gum processing machinery is a sigma-mixer, for example a double arm sigma-mixer.

In a preferred embodiment of the present invention, the first chewing gum processing machinery is a kneader. In a preferred embodiment of the present invention, the first chewing gum processing machinery is a Z-kneader or a double-Z-kneader.

In a preferred embodiment of the present invention, the second chewing gum processing machinery is an extruder.

In the present invention the amount of isomaltulose provided in step a) is at least 10 weight-% of the obtained isomaltulose-containing composition of a chewing gum core obtained in step c).

In a preferred embodiment of the present invention the amount of isomaltulose provided in step a) is at least 20 weight-% of the obtained isomaltulose-containing composition of a chewing gum core obtained in step c).

In a preferred embodiment of the present invention the amount of isomaltulose provided in step a) is at least 40 weight-% of the obtained isomaltulose-containing composition of a chewing gum core obtained in step c).

In a preferred embodiment of the present invention the amount of isomaltulose provided in step a) is at least 50 weight-% of the obtained isomaltulose-containing composition of a chewing gum core obtained in step c).

In a preferred embodiment of the present invention the amount of isomaltulose provided in step a) is at least 51 weight-% of the obtained isomaltulose-containing composition of a chewing gum core obtained in step c).

In a preferred embodiment of the present invention the amount of isomaltulose provided in step a) is at least 55 weight-% of the obtained isomaltulose-containing composition of a chewing gum core obtained in step c).

In a preferred embodiment of the present invention the amount of isomaltulose provided in step a) is at most 80 weight-% of the obtained isomaltulose-containing composition of a chewing gum core obtained in step c).

In a preferred embodiment of the present invention the amount of isomaltulose provided in step a) is at most 75 weight-% of the obtained isomaltulose-containing composition of a chewing gum core obtained in step c).

In a preferred embodiment of the present invention the amount of isomaltulose provided in step a) is at most 70 weight-% of the obtained isomaltulose-containing composition of a chewing gum core obtained in step c).

In a preferred embodiment of the present invention the amount of isomaltulose provided in step a) is at least 40 weight-% and at most 80 weight-% of the obtained isomaltulose-containing composition of a chewing gum core obtained in step c).

In a preferred embodiment of the present invention the amount of isomaltulose provided in step a) is at least 51 weight-% and at most 75 weight-% of the obtained isomaltulose-containing composition of a chewing gum core obtained in step c).

In a preferred embodiment of the present invention the amount of isomaltulose provided in step a) is around 61 weight-% of the obtained isomaltulose-containing composition of a chewing gum core obtained in step c).

In a preferred embodiment the particles have a diameter of at least 50 µm. The isomaltulose particles have a diameter of less than 100 µm, preferably less than 50 µm.

In a further preferred embodiment of the present invention, the isomaltulose component used is a milled isomaltulose, wherein the milled isomaltulose particles have a diameter of less than 100 µm, preferably less than 50 µm. In a preferred embodiment the milled particles have a diameter of at least 50 µm.

The particle size distribution of isomaltulose is preferably measured by laser diffraction. More preferably, the particle size is measured by laser diffraction using the Mastersizer 2000, made by MALVERN Instruments. With the aid of laser diffraction measurement, the particle size distribution of Isomalt can be ascertained for quality evaluation. The measuring principle is preferably based on dispersed light/laser diffraction spectroscopy according to ISO 13320. Isolated particles are brought into a laser beam in a low concentration. The particles are introduced by aspirating isomaltulose into the measuring cell ("dry measurement"). Depending on the diameter of the particles, the laser light is diffracted, which is recorded by detectors as scattered rays. The measuring results are initially extant in the form of the light intensities measured by the detectors and must be converted into a particle size distribution. This occurs by means of the associated evaluation software for the particles given here > 1 µm through an approximation by Joseph von Fraunhofer. The dosage of the samples (around 20 g) is preferably carried out using a riddle sieve with channel and adjustable gap width. A fine sieve with several balls is preferably used as a sieve insert. The dosage (gap width) must be set in such a way that the measuring concentration is attained. Air with an overpressure of 2.5 bar can be used as a dispersing medium. A person skilled in the art knows the relevant measuring parameters.

In a preferred embodiment of the present invention the isomaltulose is isomaltulose PF.

In a preferred embodiment of the present invention, the isomaltulose is essentially the only sugar present in the composition of a chewing gum core obtained in step c). In a further preferred embodiment of the present invention, the isomaltulose is the essentially only sugar present in the composition of a chewing gum core obtained in step c). In a further preferred embodiment, isomaltulose is the essentially only sweetening agent providing a body to the composition of a chewing gum core obtained in step c).

In a preferred embodiment of the present invention, the chewing gum base composition provided in step b) comprises the at least one chewing gum base component in an amount of 15 % by weight to 50 % by weight of the total weight of the obtained isomaltulose-containing composition of a chewing gum core. In a preferred embodiment of the present invention, the at least one chewing gum base component is present in an amount of at least 20 % by weight of the total weight of the obtained isomaltulose-containing composition of a chewing gum core. In a preferred embodiment of the present invention, the at least one chewing gum base component is present in an amount of at least 25 % by weight of the total weight of the obtained isomaltulose-containing composition of a chewing gum core. In a preferred embodiment of the present invention, the at least one chewing gum base component is present in an amount of at most 45 % by weight of the total weight of the obtained isomaltulose-containing composition of a chewing gum core. In a preferred embodiment of the present invention, the at least one chewing gum base component is present in an amount of at most 40 % by weight of the total weight of the obtained isomaltulose-containing composition of a chewing gum core. In a preferred embodiment of the present invention, the at least one chewing gum base component is present in an amount of at least 20 % by weight and at most 45 % by weight of the total weight of the obtained isomaltulose-containing composition of a chewing gum core. In a preferred embodiment of the present invention, the at least one chewing gum base component is present in an amount of at least 25 % by weight and at most 40 % by weight of the total weight of the obtained isomaltulose-containing composition of a chewing gum core. The at least one chewing gum base component can be present for example in an amount of at least 37 % by weight and at most 41 % by weight of the total weight of the obtained isomaltulose-containing composition of a chewing gum core.

If not outlined else, %-values given the in present description mean weight-% on dry matter.

In a preferred embodiment of the present invention, no isomalt is provided in step a).

In an alternative embodiment of the present invention, a mixture of isomalt and isomaltulose is provided in step a).

In a preferred embodiment of the present invention, the chewing gum base composition provided in step b) comprises at least one water insoluble chewing gum base component.

In the context of the present invention the term "comprising" preferably has the meaning of "containing" or "including" meaning that the composition in question at least comprises the specifically identified component without excluding the presence of further components. However, in a preferred embodiment the term comprising is also understood to have the meaning of "consisting essentially of and in a most preferred embodiment of "consisting". The term "consisting essentially of" excludes the presence of substantial amounts of further components except the specifically identified component of the composition. The term "consisting" excludes the presence of any further compound, no matter in which quantity in the composition identified.

In the context of the present invention the term "comprising essentially" preferably has the meaning that the specifically identified component is the component with the highest proportion in the composition in question compared to the components present in the composition in question. However, in a preferred embodiment the term "comprising essentially" means that the composition in question comprises at least 50 % by weight, even more preferably at least 51 % by weight of the specifically identified component.

In the context of the present invention the term "at least one" preferably has the meaning that one component or more than one components, for example two, three or more components are present.

In a preferred embodiment of the present invention, the chewing gum base composition provided in step b) comprises at least one chewing gum base component selected from the group consisting of at least one sweetener component, at least one high intensity sweetener component, at least one flavouring component, at least one colouring component and at least one rolling component.

In a preferred embodiment of the present invention, the chewing gum base composition provided in step b) comprises no sugar alcohol. In a preferred embodiment of the present invention, the chewing gum base composition provided in step b) comprises no sugar alcohol selected from the group consisting of isomalt, maltitol, mannitol, xylitol, sorbitol, erythritol and mixtures thereof. In a preferred embodiment of the present invention, the chewing gum base composition provided in step b) comprises no sugar alcohol selected from the group consisting of maltitol, mannitol, xylitol, sorbitol, erythritol and mixtures thereof. In a preferred embodiment of the present invention, the chewing gum base composition provided in step b) comprises no sugar alcohol selected from the group consisting of mannitol, xylitol, sorbitol, erythritol and mixtures thereof.

In a preferred embodiment of the present invention, the chewing gum base composition provided in step b) comprises no isomalt. In a preferred embodiment of the present invention, the chewing gum base composition provided in step b) comprises no maltitol. In a preferred embodiment of the present invention, the chewing gum base composition provided in step b) comprises no mannitol. In a preferred embodiment of the present invention, the chewing gum base composition provided in step b) no xylitol. In a preferred embodiment of the present invention, the chewing gum base composition provided in step b) comprises no sorbitol. In a preferred embodiment of the present invention, the chewing gum base composition provided in step b) comprises no erythritol.

In an alternative embodiment of the present invention, the chewing gum base composition provided in step b) comprises isomalt. In a preferred embodiment of the present invention, the chewing gum base composition provided in step b) comprises sorbitol. In a preferred embodiment of the present invention, the chewing gum base composition provided in step b) comprises maltitol. In a preferred embodiment of the present invention, the chewing gum base composition provided in step b) comprises maltitol and sorbitol.

Accordingly, in a preferred embodiment of the present invention, the composition of a chewing gum core obtained in step c) comprises sorbitol and/or maltitol.

In a preferred embodiment of the present invention, the composition of a chewing gum core obtained in step c) comprises at least 20 weight-% sorbitol (referring to the total weight amount of the obtained isomaltulose-containing composition of a chewing gum core).

In a preferred embodiment of the present invention, the composition of a chewing gum core obtained in step c) comprises at least 20 weight-% maltitol (referring to the total weight amount of the obtained isomaltulose-containing composition of a chewing gum core).

In a preferred embodiment of the present invention, the composition of a chewing gum core obtained in step c) comprises at most 49 weight-% sorbitol (referring to the total weight amount of the obtained isomaltulose-containing composition of a chewing gum core).

In a preferred embodiment of the present invention, the composition of a chewing gum core obtained in step c) comprises at most 49 weight-% maltitol (referring to the total weight amount of the obtained isomaltulose-containing composition of a chewing gum core).

In a preferred embodiment of the present invention, the composition of a chewing gum core obtained in step c) comprises at least 20 weight-% sorbitol and/or maltitol (referring to the total weight amount of the obtained isomaltulose-containing composition of a chewing gum core). In a preferred embodiment of the present invention, the composition of a chewing gum core obtained in step c) comprises at most 50 weight-% sorbitol and/or maltitol (referring to the total weight amount of the obtained isomaltulose-containing composition of a chewing gum core). In a preferred embodiment of the present invention, the composition of a chewing gum core obtained in step c) comprises at least 21 weight-% sorbitol and/or maltitol (referring to the total weight amount of the obtained isomaltulose-containing composition of a chewing gum core). In a preferred embodiment of the present invention, the composition of a chewing gum core obtained in step c) comprises at most 49 weight-% sorbitol and/or maltitol (referring to the total weight amount of the obtained isomaltulose-containing composition of a chewing gum core).

In a preferred embodiment of the present invention, the composition of a chewing gum core obtained in step c) comprises at least 20 weight-% and at most 50 weight-% sorbitol and/or maltitol (referring to the total weight amount of the obtained isomaltulose-containing composition of a chewing gum core) and at least 10 weight-% and at most 85 weight-% isomaltulose (referring to the total weight amount of the obtained isomaltulose-containing composition of a chewing gum core). In a preferred embodiment of the present invention, the composition of a chewing gum core obtained in step c) comprises at least 21 weight-% and at most 49 weight-% sorbitol and/or maltitol (referring to the total weight amount of the obtained isomaltulose-containing composition of a chewing gum core) and at least 40 weight-% and at most 80 weight-% isomaltulose (referring to the total weight amount of the obtained isomaltulose-containing composition of a chewing gum core). In a preferred embodiment of the present invention, the composition of a chewing gum core obtained in step c) comprises around 20 weight-% sorbitol and/or maltitol (referring to the total weight amount of the obtained isomaltulose-containing composition of a chewing gum core) and around 61 weight-% weight-% isomaltulose (referring to the total weight amount of the obtained isomaltulose-containing composition of a chewing gum core).

In a preferred embodiment of the present invention, the composition of a chewing gum core obtained in step c) comprises at least 10 weight-% and at most 30 weight-% sorbitol (referring to the total weight amount of the obtained isomaltulose-containing composition of a chewing gum core), at least 10 weight-% and at most 20 weight-% maltitol (referring to the total weight amount of the obtained isomaltulose-containing composition of a chewing gum core) and at least 40 weight-% and at most 75 weight-% isomaltulose (referring to the total weight amount of the obtained isomaltulose-containing composition of a chewing gum core).

In a preferred embodiment of the present invention, the composition of a chewing gum core obtained in step c) comprises at least 40 weight-% and at most 60 weight-% of at least one sugar alcohol (referring to the total weight amount of the obtained isomaltulose-containing composition of a chewing gum core).

In a preferred embodiment of the present invention, the chewing gum base composition provided in step b) is sugar-free. In a further preferred embodiment, the chewing gum base composition provided in step b) is free of sucrose, free of glucose, free of lactose and/or free of fructose or free of combinations of at least two of these sugars.

In a preferred embodiment of the present invention, the chewing gum base composition provided in step b) is tooth-friendly.

In a preferred embodiment of the present invention, the chewing gum base composition provided in step b) is sugar-free, in particular free of sucrose, free of glucose, free of lactose and/or free of fructose or free of combinations of at least two of these sugars.

In a preferred embodiment of the present invention, the chewing gum base composition provided in step b) comprises at least one tooth-friendly sugar or sugar alcohol.

In a preferred embodiment of the present invention, the at least one tooth-friendly sugar in the chewing gum base composition provided in step b) is selected from the group consisting of isomaltulose, nutriose, leukrose and polydextrose. In a further preferred embodiment, the amount of non-tooth-friendly ingredients is at maximum 1 weight-% (referring to the total weight amount of the obtained isomaltulose-containing composition of a chewing gum core).

In a further preferred embodiment of the present invention, the at least one tooth-friendly sugar alcohol in the chewing gum base composition provided in step b) is selected from the group of isomalt, xylitol, mannitol, maltitol, erythritol, lactitol or sorbitol.

In an alternative embodiment of the present invention, the composition of a chewing gum core obtained in step c) comprises at least 45 weight-% and at most 80 weight-% of at least one sugar (referring to the total weight amount of the obtained isomaltulose-containing composition of a chewing gum core).

In a preferred embodiment of the present invention, the chewing gum base composition provided in step b) comprises further at least one additive.

In a preferred embodiment of the present invention, the at least one additive is selected from the group consisting of sugars, preferably tooth-friendly sugars, sugar alcohols, intense sweeteners, hydrocolloid, gum base, plastifiers, lubricant, emulsifiers, protein components, milk components, dairy ingredients, fat and fat substitutes, vegetable fat, vitamins, minerals, pharmaceutically active ingredients, preservatives, aroma, flavourings, such as peppermint, menthol, fruit, strawberry flavour, colours, TiO₂, edible acids, such as citric acid, and dietary fibres.

In a preferred embodiment of the present invention, the chewing gum base composition provided in step b) is a chewing gum base composition known in the state of the art. A person skilled in the art knows suitable chewing gum base compositions.

In a preferred embodiment of the present invention, the composition of a chewing gum core obtained in step c) consists essentially of the isomaltulose provided in step a) and the chewing gum base composition provided in step b). In a preferred embodiment of the present invention, the composition of a chewing gum core obtained in step c) consists of the isomaltulose provided in step a) and the chewing gum base composition provided in step b).

In a particularly preferred embodiment of the present invention, the isomaltulose is the only sweetening agent present in the composition of a chewing gum core obtained in step c). In a further preferred embodiment of the present invention, the isomaltulose is the only sugar present in the composition of a chewing gum core obtained in step c). In a further preferred embodiment, the isomaltulose is the only sweetening agent providing a body to the composition of a chewing gum core obtained in step c). Thus, in this preferred embodiment, in addition to the isomaltulose, an intense sweetener may also be present the composition of a chewing gum core obtained in step c).

In a further preferred embodiment of the present invention, either maltitol or sorbitol or isomalt are the only sugar alcohols present in the composition of a chewing gum core obtained in step c).

In a further preferred embodiment of the present invention, isomalt and sorbitol are the only sugar alcohols present in the composition of a chewing gum core obtained in step c). In a further preferred embodiment of the present invention, isomalt and maltitol are the only sugar alcohols present in the composition of a chewing gum core obtained in step c).

In a preferred embodiment, the composition of a chewing gum core obtained in step c) comprises an intense sweetener.

In a preferred embodiment of the present invention, the intense sweetener is selected from the group of cyclamate, saccharin, aspartame, glycyrrhicine, neohesperidine-dihydrochalcone, steviol glycosides, thaumatin, monellin, acesulfame, alitame, sucralose or a mixture thereof. The steviol glycosides can be for example stevioside or rebaudioside A.

After the ingredients have been thoroughly kneaded, in step c) the composition of a chewing gum core is preferably discharged from the mixer or kneader and shaped into the desired form such as by rolling into sheets and cutting into sticks, extruding into chunks or casting into pellets. Generally, ingredients of the chewing gum core material are mixed by first melting the gum base and adding it into the running mixer. The base may also be melted in the mixer itself. Colour or emulsifiers may also be added at this time. A softener such as glycerine may also be added at this time along with syrup and a portion of bulking agent. Further portions of the bulking agent may then be added to the mixer. A flavouring agent is typically added with a final portion of the bulking agent. The entire mixing or kneading procedure typically takes from 5 to 50 minutes, but longer mixing times may sometimes be required. Those skilled in the art will recognise that many variations of the above-described procedure may be followed.

The isomaltulose provided in step a) can be added to the first chewing gum processing machinery before or after adding the chewing gum base composition provided in step b). The isomaltulose provided in step a) can also be added during the mixing of the components of the chewing gum base composition provided in step b). The isomaltulose provided in step a) can also be added stepwise.

Preferably, the isomaltulose provided in step a) is added during the mixing of the components of the chewing gum base composition provided in step b).

The present invention solves the underlying technical problem also by the use of isomaltulose in a composition of a chewing gum base for reducing the stickiness of the composition to the internal contact surface of a chewing gum processing machinery, as defined in claim 8. Preferred embodiments of the use according to the present invention concerning the isomaltulose, the chewing gum base composition, the composition of a chewing gum core and/or the chewing gum processing machinery are outlined in the description of the process according to the present invention.

In a preferred embodiment, the isomaltulose is used intentionally for reducing the stickiness of the composition to the internal contact surface of a chewing gum processing machinery.

In a preferred embodiment of the present invention, the isomaltulose is used for reducing the stickiness of the composition to the internal contact surface of a chewing gum processing machinery, wherein the stickiness is reduced in comparison to an amount equivalent maltitol-containing composition of a chewing gum core.

Further disclosed is an isomaltulose-containing composition of a chewing gum core, produced in the process according to the present invention, wherein the composition of a chewing gum core has a reduced stickiness to the internal contact surface of a chewing gum processing machinery. Preferred embodiments of the isomaltulose-containing composition of a chewing gum core concerning the isomaltulose, the chewing gum base composition, the composition of a chewing gum core and/or the chewing gum processing machinery are outlined in the description of the process according to the present invention.

Further disclosed is a chewing gum core made from the composition of a chewing gum core obtained in step c). In a preferred embodiment the chewing gum core is provided as a sheet.

In a preferred embodiment of the present invention, the chewing gum core is a filled or non-filled chewing gum core.

Further disclosed is a chewing gum product comprising the composition of a chewing gum core obtained in step c). The chewing gum products may be coated or non-coated chewing gum products. In one embodiment is foreseen to provide non-coated chewing gum products such as chewing gum sticks. In another preferred embodiment is foreseen to coat the chewing gum product prepared according to the present invention with at least one layer of coating material so as to produce a coated chewing gum product and wherein said at least one layer is enveloping the rolling compound present on the surface of the chewing gum core material.

Further preferred embodiments of the present invention are the subject matter of the subclaims.

The invention is illustrated by way of the following example:

### Example: Kneading of chewing gum base compositions with isomaltulose

Following receipt was used:

**Table 1:**

| | |
|---|---|
| gum base Navia (Cafosa) | 34,0% |
| isomaltulose (palatinose PF) | 61,0% |
| Glycerol (Kruse) | 0,9% |
| peppermint oil (Symrise 219834) | 2,0% |
| menthol (Symrise 163592) | 1,5% |
| Symlife Sweet (Symrise 198234) | 0,5% |
| Stevia RE | 0,1% |

| | |
|---|---|
| % are weight-%. | |

As kneader a Sigma kneading machine IP 25 AP/T-CG from Gabler GmbH & Co KG, Ettlingen, Germany was used. This kneader has a maximal working capacity of 17.5 litres. The rotation of the kneader can be from 15 to 45 rpm. The working temperature of the kneader can be from 5°C to 90°C. The cleanout of the kneader is done with overturning the vessel (motorized; angle 100°).

Gum base and glycerol was mixed in the kneader for 40 minutes at 50°C. Symlife Sweet was added to the kneader and the mixture was kneaded for further 10 minutes. 50 weight-% of the isomaltulose was added to the kneader and the mixture was kneaded for further 20 minutes. The flavours and the second half of isomaltulose were added and the mixture was kneaded for further 30 minutes. After the mixing the mixture rested for a period of 20 minutes. The according total amount of the kneaded mixture was 10 kg. The temperature used for the kneading process was 50°C.

The kneader was emptied by discharging the mass without scratching residual amounts of the mass out of kneader. The mass discharged from the kneader was weighted to compare the rests of compositions of chewing gum cores in the kneader. Furthermore the inner surface of the kneader was photographed to make the differences visible on pictures.

Using isomaltulose the cleaning process after kneading is reduced. Less than 1 weight-% of the chewing gum mass sticks to the wall of the kneader. This was also visible from the pictures.

The use of the isomaltulose results in reduced remaining material when emptying the batch, thus increased capacity, easier cleaning and reduced thermal load of the remaining material. These are all value-increasing features when producing chewing gums.

## Claims

1. A process for reducing the stickiness of a composition of a chewing gum core to an internal contact surface of a first chewing gum processing machinery in a chewing gum preparation process comprising the following steps:
a) providing isomaltulose in an amount suitable to reduce stickiness of the composition to the surface, wherein the isomaltulose particles have a diameter of less than 100 µm,
b) providing a chewing gum base composition and
c) kneading the isomaltulose provided in step a) with the chewing gum base composition provided in step b) and obtaining the isomaltulose-containing composition of a chewing gum core,
wherein step c) is carried out on the internal contact surface of the first chewing gum processing machinery, and wherein the amount of isomaltulose provided in step a) is at least 10 weight-% of the isomaltulose-containing composition of the chewing gum core obtained in step c).

2. The process according to claim 1, comprising the further step:
d) subjecting the obtained isomaltulose-containing composition of a chewing gum core to an contact surface of a second chewing gum processing machinery.

3. The process according to claim 1 or claim 2, wherein the internal contact surface of the first and the contact surface of the second chewing gum processing machinery is made of steel, preferably stainless steel.

4. The process according to claim 1 or claim 2, wherein the first chewing gum processing machinery is a kneader.

5. The process according to claim 2, wherein the second chewing gum processing machinery is an extruder.

6. The process according to any one of claims 1 to 5, wherein the chewing gum base composition comprises at least one water insoluble chewing gum base component.

7. The process according to any one of claims 1 to 6, wherein the chewing gum base composition provided in step b) comprises at least one chewing gum base component selected from the group consisting of at least one sweetener component, at least one high intensity sweetener component, at least one flavouring component, at least one colouring component and at least one rolling component.

8. Use of isomaltulose in a composition of a chewing gum base for reducing stickiness of the composition to the internal contact surface of a chewing gum processing machinery, which isomaltulose is kneaded with the chewing gum base composition, wherein the amount of isomaltulose is at least 10 weight-% of an isomaltulose-containing composition of a chewing gum core, and wherein the isomaltulose particles have a diameter of less than 100 µm.

## Patentansprüche

1. Verfahren zur Verringerung der Klebrigkeit einer Zusammensetzung eines Kaugummikerns zu einer inneren Kontaktoberfläche einer ersten Kaugummiverarbeitungsmaschine in einem Kaugummiherstellungsprozess, umfassend die folgenden Schritte:
a) Bereitstellen von Isomaltulose in einer Menge, die ausreicht, um die Klebrigkeit der Zusammensetzung an der Oberfläche zu verringern, wobei die Isomaltulosepartikel einen Durchmesser von weniger als 100 µm aufweisen,
b) Bereitstellen einer Kaugummibasiszusammensetzung, und
c) Verkneten der in Schritt a) bereitgestellten Isomaltulose mit der in Schritt b) bereitgestellten Kaugummibasiszusammensetzung und Erhalten der Isomaltulose-enthaltenden Zusammensetzung eines Kaugummikerns,
wobei Schritt c) auf der inneren Kontaktoberfläche der ersten Kaugummiverarbeitungsmaschine durchgeführt wird und wobei die Menge der in Schritt a) bereitgestellten Isomaltulose mindestens 10 Gew.-% der Isomaltulose-enthaltenden Zusammensetzung des in Schritt c) erhaltenen Kaugummikerns beträgt.

2. Verfahren nach Anspruch 1, umfassend den weiteren Schritt:
d) Unterziehen der erhaltenen Isomaltulose-enthaltenden Zusammensetzung eines Kaugummikerns einer Kontaktoberfläche einer zweiten Kaugummiverarbeitungsmaschine.

3. Verfahren nach Anspruch 1 oder Anspruch 2, wobei die innere Kontaktoberfläche der ersten und die Kontaktoberfläche der zweiten Kaugummiverarbeitungsmaschine aus Stahl hergestellt ist, bevorzugt aus Edelstahl.

4. Verfahren nach Anspruch 1 oder Anspruch 2, wobei die erste Kaugummiverarbeitungsmaschine eine Knetmaschine ist.

5. Verfahren nach Anspruch 2, wobei die zweite Kaugummiverarbeitungsmaschine ein Extruder ist.

6. Verfahren nach einem der Ansprüche 1 bis 5, wobei die Kaugummibasiszusammensetzung mindestens eine wasserunlösliche Kaugummibasiskomponente umfasst.

7. Verfahren nach einem der Ansprüche 1 bis 6, wobei die in Schritt b) bereitgestellte Kaugummibasiszusammensetzung mindestens eine Kaugummibasiskomponente umfasst, die ausgewählt ist aus der Gruppe, bestehend aus mindestens einer Süßungsmittelkomponente, mindestens einer Süßungsmittelkomponente mit hoher Intensität, mindestens einer Geschmacksmittelkomponente, mindestens einer Färbungsmittelkomponente und mindestens einer Rollkomponente.

8. Verwendung von Isomaltulose in einer Zusammensetzung einer Kaugummibasis zur Verringerung der Klebrigkeit der Zusammensetzung zu der inneren Kontaktoberfläche einer Kaugummiverarbeitungsmaschine, wobei die Isomaltulose mit der Kaugummibasiszusammensetzung verknetet wird, wobei die Menge an Isomaltulose mindestens 10 Gew.-% einer Isomaltulose-enthaltenden Zusammensetzung eines Kaugummikerns beträgt und wobei die Isomaltulosepartikel einen Durchmesser von weniger als 100 µm aufweisen.

## Revendications

1. Procédé de réduction de l'adhérence d'une composition de coeur de gomme à mâcher sur une surface de contact interne d'une première machine de traitement de gomme à mâcher dans un procédé de préparation de gomme à mâcher comprenant les étapes suivantes :
a) fournir d'isomaltulose en une quantité appropriée pour réduire l'adhérence de la composition sur la surface, dans lequel les particules d'isomaltulose ont un diamètre inférieur à 100 µm,
b) fournir d'une composition de base de gomme à mâcher et
c) de malaxage de l'isomaltulose fourni dans l'étape a) avec la composition de base de gomme à mâcher fourni dans l'étape b) et d'obtention de la composition contenant l'isomaltulose d'un coeur de gomme à mâcher,
dans lequel l'étape c) est réalisée sur la surface de contact interne de la première machine de traitement de gomme à mâcher, et dans lequel la quantité de l'isomaltulose fourni dans l'étape a) représente au moins 10 % en poids de la composition contenant l'isomaltulose du coeur de gomme à mâcher obtenu dans l'étape c).

2. Procédé selon la revendication 1, comprenant l'étape supplémentaire :
d) d'exposition de la composition obtenue contenant l'isomaltulose d'un coeur de gomme à mâcher sur une surface de contact d'une seconde machine de traitement de gomme à mâcher.

3. Procédé selon la revendication 1 ou la revendication 2, dans lequel la surface de contact interne de la première machine et la surface de contact de la seconde machine de traitement de gomme à mâcher sont fabriquées en acier, de préférence en acier inoxydable.

4. Procédé selon la revendication 1 ou la revendication 2, dans lequel la première machine de traitement de gomme à mâcher est un malaxeur.

5. Procédé selon la revendication 2, dans lequel la seconde machine de traitement de gomme à mâcher est une extrudeuse.

6. Procédé selon l'une quelconque des revendications 1 à 5, dans lequel la composition de base de gomme à mâcher comprend au moins un composant de base de gomme à mâcher insoluble dans l'eau.

7. Procédé selon l'une quelconque des revendications 1 à 6, dans lequel la composition de base de gomme à mâcher fourni à l'étape b) comprend au moins un composant de base de gomme à mâcher choisi dans le groupe constitué d'au moins un composant édulcorant, d'au moins un composant édulcorant de haute intensité, d'au moins un composant aromatisant, d'au moins un composant colorant et d'au moins un composant d'étirage.

8. Utilisation d'isomaltulose dans une composition de base de gomme à mâcher pour réduite l'adhérence de la composition sur la surface de contact interne d'une machine de traitement de gomme à mâcher, lequel isomaltulose est malaxé avec la composition de base de gomme à mâcher, dans laquelle la quantité d'isomaltulose est au moins de 10 % en poids d'une composition contenant l'isomaltulose d'un coeur de gomme à mâcher, et dans laquelle les particules d'isomaltulose ont un diamètre inférieur à 100 µm.
